# EUROPÄISCHE PATENTANMELDUNG

(11) **EP 2 522 221 A1**
(43) Veröffentlichungstag der Anmeldung: **14.11.2012**
(21) Anmeldenummer: 12166985.7
(22) Anmeldetag: 07.05.2012
(51) Int. Cl.: A01K 63/04, A61H 33/00, A61H 35/00

(54) **Verfahren und Vorrichtung zur Hautbehandlung einer Person mittels Hautschuppen fressender Fische**

(30) Priorität: 12.05.2011 DE 202011100571 U
(71) Anmelder: Jaspert, Dirk, 44143 Dortmund (DE)
(72) Erfinder: Jaspert, Dirk, 44143 Dortmund (DE)
(74) Vertreter: Meinke, Dabringhaus und Partner GbR

(57) **Zusammenfassung**

Mit einem Verfahren sowie einer Vorrichtung (1) zur Hautbehandlung einer Person mittels Hautschuppen fressender Fische, insbesondere Garra Rufa Doktorfischen, wobei die zu behandelnde Person insgesamt oder mit Teilen des Körpers in einem mit den Fischen besetzten Becken (2) eintaucht, soll eine Lösung geschaffen werden, mit der eine besondere Entkeimung des eingesetzten Wassers erreicht wird bei Aufrechterhaltung optimaler Lebensbedingungen für die eingesetzten Fische, wobei eine entsprechende Vorrichtung (1) auch einen Einsatz insbesondere im privaten Bereich möglich machen soll.

Dies wird verfahrensmäßig dadurch erreicht, dass das Wasser im Becken im Kreislauf über Filter, über eine Heizung, eine Ozonreaktorkammer sowie einen Aktivkohlefilter im Kreislauf geführt wird.

## Beschreibung

Die Erfindung richtet sich auf ein Verfahren zur Hautbehandlung einer Person mittels Hautschuppen fressender Fische, insbesondere Garra Rufa Doktorfischen, wobei die zu behandelnde Person insgesamt oder mit Teilen des Körpers in einem mit den Fischen besetzten Becken eintaucht.

Bei einem Teil von Hautkrankheiten, z.B. bei Neurodermitis, ist es bekannt, eine schonende Hautbehandlung dadurch vorzunehmen, dass die betroffenen Körperteile in mit sogenannten Doktorfischen besetzten Wasserbecken vorgenommen werden. Dabei werden kleine Karpfenfische eingesetzt, deren botanischer Name Garra Rufa ist. Heilpraktiker und Privatkliniken bieten derartige Kuren mit diesen "Kangalfischen" an.

Eine derartige Behandlung der menschlichen Haut ist bekannt, wie beispielsweise die US 2010/0139680 A1, DE 20 2009 006 805 U1, DE 20 2010 012 679 U1 oder die AT 502 790 A1 zeigen. Dabei wird im Stand der Technik auch eine entsprechende Wasserbehandlung vorgeschlagen, u.a. eine Entkeimung mittels UVC-Filtern mit Umwälzung des eingesetzten Wassers, wie dies die AT 502 790 A1 beschreibt.

Aufgabe der Erfindung ist die Schaffung einer Lösung, mit der eine besondere Entkeimung des eingesetzten Wassers erreicht wird bei Aufrechterhaltung optimaler Lebensbedingungen für die eingesetzten Fische, wobei eine entsprechende Vorrichtung auch einen Einsatz insbesondere im privaten Bereich möglich machen soll.

Mit einem Verfahren der eingangs bezeichneten Art wird diese Aufgabe gemäß der Erfindung dadurch gelöst, dass das Wasser im Becken im Kreislauf über Filter, über eine Heizung, eine Ozonreaktorkammer sowie einen Aktivkohlefilter im Kreislauf geführt wird.

Das Vorsehen einer Ozonreaktorkammer zur Beaufschlagung des eingesetzten Wassers steht hier im Vordergrund, um eine optimale Entkeimung möglich zu machen, wobei gleichzeitig erreicht wird, dass sich das so behandelte Wasser mit Sauerstoff anreichert, so dass während der Behandlung keiner Zufuhr von Luft in das Becken bedarf, etwa über Sprudelsteine, wie dies in Aquarien üblich und bekannt ist.

Ausgestaltungen der Erfindung ergeben sich aus den Unteransprüchen. Dabei kann vorgesehen sein, über ein Redox-Mess- und -Regelgerät einen Sollwert zwischen 300 und 500mV einzustellen, wobei auch vorgesehen ist, die Wassertemperatur auf 30°C bis 36°C zu regeln.

Zur Lösung der obigen Aufgabe zeichnet sich eine Vorrichtung der eingangs genannten Gattung durch wenigstens ein mit den Fischen und mit zu deren Überleben aufbereitetem Wasser gefülltes Becken aus, in das die zu behandelnde Person insgesamt oder mit Teilen des Körpers, wie Armen und Beinen, eintauchbar ist, sowie mit einer dem Becken unmittelbar zugeordneten Wasseraufbereitungsanlage.

Um den Fischen einen entsprechenden Lebensraum zu bieten, wird mit der entsprechenden Wasseraufbereitungsanlage das Wasser gereinigt und beispielsweise einer Ozonbehandlungsanlage zugeführt und auf einer Temperatur von 30°C bis 36°C gehalten. Durch die Kombination einer wenig Raum benötigenden Wasseraufbereitungsanlage einerseits und einem unmittelbar dieser Aufbereitungsanlage zugeordneten Becken wird eine kompakte Bauweise ermöglicht, so dass eine derartige Vorrichtung auch im privaten Bereich eingesetzt werden kann. Natürlich ist diese Anwendung auch in Kliniken oder auch bei Therapeuten möglich.

Ausgestaltungen der Erfindung ergeben sich aus den Unteransprüchen. Dabei kann vorgesehen sein, dass das Becken als Fußtauchbecken ausgebildet ist.

Um den Komfort zu erhöhen kann vorgesehen sein, dass die Sitzfläche als Drehsitz ausgebildet ist.

In einer weiteren Ausgestaltung ist nach der Erfindung vorgesehen, dass die Sitzfläche von einem in Aufsicht etwa U-förmigen, teilweise geöffneten Becken umgeben ist zur Positionierung der Hände und der Unterarme der die Vorrichtung benutzenden Person. Das umgebende Becken kann beispielsweise auf den Rand des Sitzes aufsteckbar sein, um so die ohnehin für das Fußbecken vorhandene Wasseraufbereitungsanlage unmittelbar anschließen zu können, was die Vorrichtung für diese unterschiedlichen Behandlungsmöglichkeiten von Füßen und Armen in einfacher Weise geeignet macht.

Wie eingangs schon erwähnt, ist erfindungsgemäß die Aufbereitungsanlage mit Filtern und einer Ozonbehandlungseinrichtung ausgerüstet.

Um eine optisch ansprechbare Gestaltung zu ermöglichen, kann in weiterer Ausgestaltung vorgesehen sein, dass das Becken aus einem transparenten Material, insbesondere aus Plexiglas, gebildet ist, wobei das Becken die unterschiedlichsten Gestaltungen und Formen annehmen kann. Neben einem reinen Tauchbecken für Füße und Arme kann selbstverständlich das Becken auch als größere Wanne ausgebildet sein, um eine Ganzkörperbehandlung zu ermöglichen.

Eine besondere Ausgestaltung der Erfindung besteht darin, dass das Fußbecken im Wesentlichen in Aufsicht neben zwei geraden Seitenwänden eine etwa halbkreisförmige und eine gerade Stirnwand aufweist, wobei der geraden Stirnfläche der Sitz bzw. die angeschlossene Wasseraufbereitungsanlage unmittelbar zugeordnet ist.

Der Sitz kann sich dadurch auszeichnen, dass der Sitz als über die Wasseraufbereitungseinrichtung stülpbarer Hocker mit drehbarer und/oder höhenverstellbarer Sitzfläche ausgebildet ist.

Weitere Einzelheiten, Merkmale und Vorteile der Erfindung ergeben sich aufgrund der nachfolgenden Beschreibung sowie anhand der Zeichnung. Diese zeigt in
- Fig. 1: eine räumliche vereinfachte Darstellung einer ersten Ausführungsform der erfindungsgemäßen Vorrichtung,
- Fig. 2: eine Aufsicht gemäß Pfeil II in Fig. 1,
- Fig. 3: die Vorrichtung gemäß Fig. 1 und 2 mit zugeordnetem Sitz in räumlicher Darstellung,
- Fig. 4: eine Seitenansicht etwa Pfeil IV in Fig. 3,
- Fig. 5: eine räumliche Darstellung einer abgewandelten Ausführungsform mit Becken für Hand und Arme sowie in
- Fig. 6: eine Aufsicht etwa gemäß Pfeil 6 in Fig. 5 sowie in
- Fig. 7: eine vereinfachte Darstellung eines Ganzkörperbeckens nach der Erfindung.

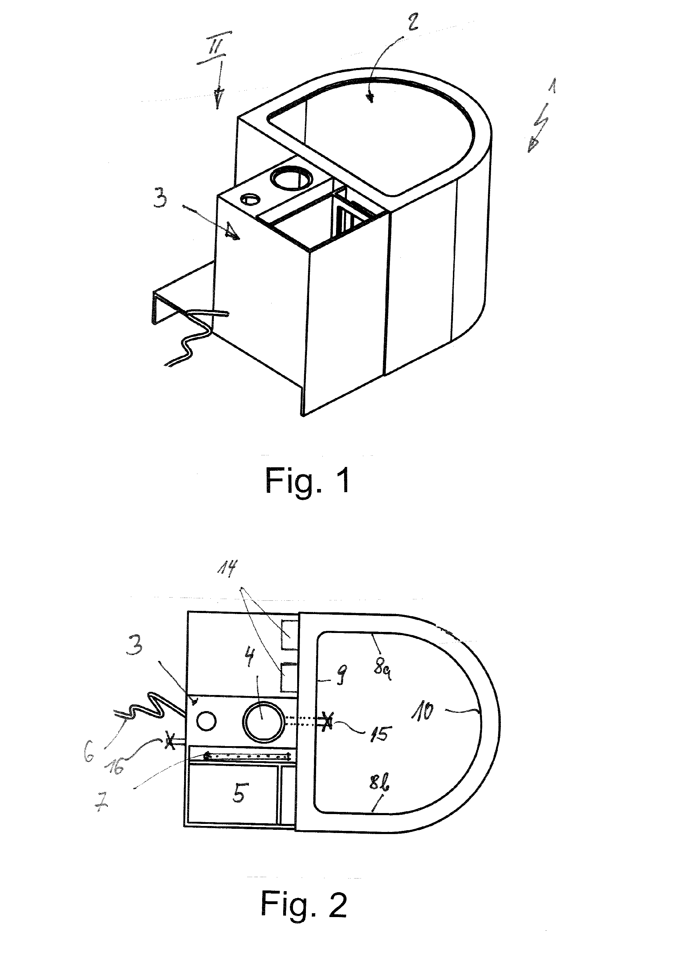

Die allgemein mit 1 bezeichnete Vorrichtung besteht im Wesentlichen bei der Ausführungsform nach den Fig. 1 und 2 aus einem Becken 2 für Füße und einer allgemein mit 3 bezeichneten Wasseraufbereitungsanlage für das im Becken 2 befindliche Wasser, das in der Gebrauchslage mit "Doktorfischen" besetzt ist.

Die einzelnen Elemente der Wasseraufbereitungsanlage 3 sind in den Figuren nicht näher dargestellt, lediglich Aufnahmen 4 für ggf. dem Wasser hinzuzufügende Additive, eine Filtereinheit 5, ein elektrischer Anschluss 6 für einen Transformator bzw. für ein Heizelement, aber auch ein nicht näher dargestelltes Ozonbehandlungsgerät. Die notwendige Steuerelektronik ist mit 7 bezeichnet und ebenfalls nur angedeutet.

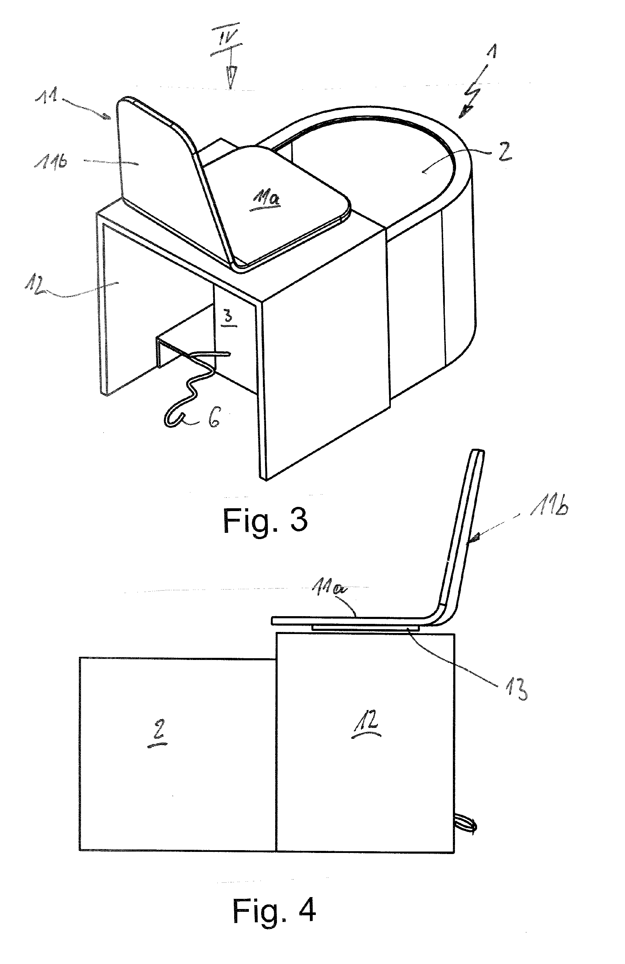

Das in den Fig. 1 und 2 ebenso wie in den Fig. 3 und 4 dargestellte Becken 2 kann beispielsweise aus Plexiglas gestaltet sein und weist in Aufsicht gemäß Fig. 2 zwei gegenüberliegende gerade Wände 8a und 8b auf, eine die beiden Wände verbindende gerade Wand 9 und eine halbskreisförmige gebogene Wand 10, wobei unmittelbar der geraden Wand 9 die Wasseraufbereitungsanlage 3 zugeordnet ist.

Wie in den Fig. 3 und 4 dargestellt, ist die Vorrichtung 1 mit einem Sitz 11 ausgestattet für die die Vorrichtung benutzende Person, wobei der Sitz 11 auf einem Hockerelement 12 drehbar und ggf. höhenverstellbar positioniert ist, wobei in Fig. 4 lediglich eine Drehscheibe 13 angedeutet ist. Das hockerähnliche Element 12 ist über die Wasseraufbereitungsanlage 3 derart gestülpt, dass sie entsprechend geschützt ist, wobei anzumerken ist, dass das hockerähnliche Element 12 nicht in der dargestellten Weise gestaltet sein muss. Hier kann ein Stahlrohrgestell ebenso vorgesehen sein, wie andere entsprechende Gestaltungen.

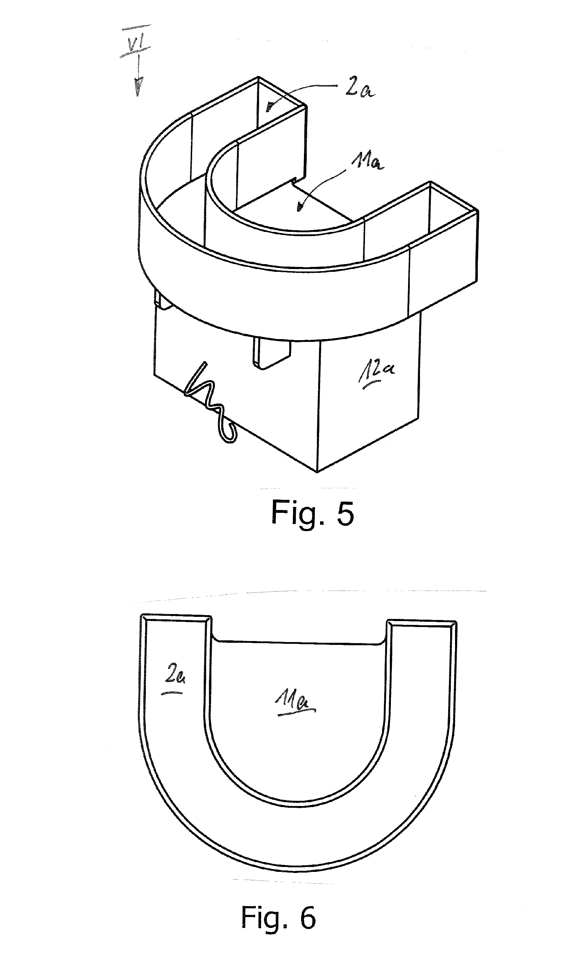

In den Fig. 5 und 6 ist ein abgewandeltes Ausführungsbeispiel wiedergegeben. Hier ist die gesamte Wasseraufbereitungsanlage 3 in einer Box 12 untergebracht, die an ihrer Oberseite mit einer Sitzfläche 11a ausgerüstet ist, um die hierum ein etwa hufeisenförmig gestaltetes Wasserbecken 2a positioniert ist. Dieses Becken ist so gestaltet, dass eine benutzende Person in den entsprechenden mit Wasser und Fischen besetzten Beckenbereich die Hände oder auch die Unterarme einlegen kann.

Auch kann die Gestaltung so getroffen sein, dass bei einer trennbaren Rücklehne 11b des Sitzes 11 von der Sitzfläche 11a das Becken 2a an die Sitzfläche 11a anclipsbar oder dort aufsteckbar ist, um die gesamte Wasseraufbereitungsanlage 3 unter dem schemelartigen Element 12 mit nutzen zu können.

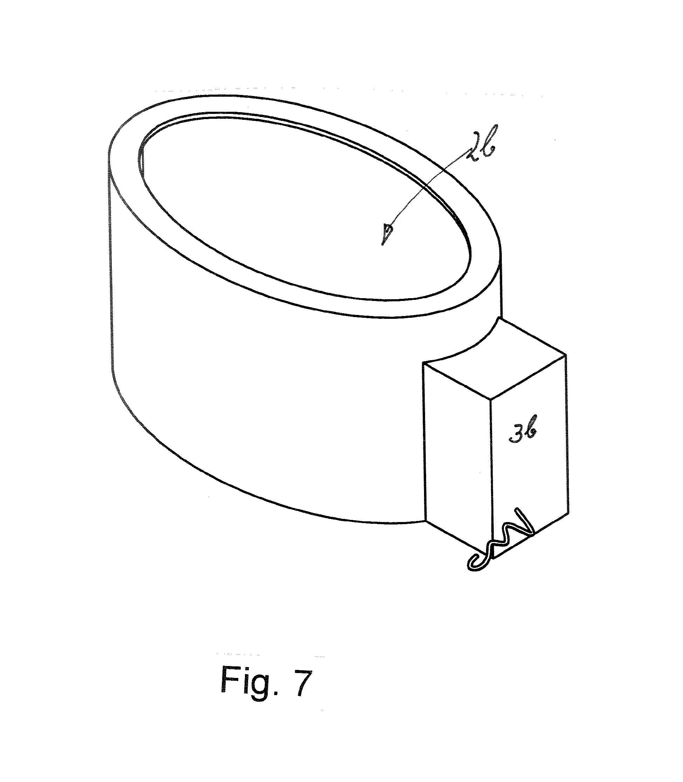

Schließlich zeigt Fig. 7 noch eine Badewanne als Becken 2b, der eine Wasseraufbereitungsanlage 3b zugeordnet ist, um eine Ganzkörperbehandlung mit den Doktorfischen zu ermöglichen.

Die wesentliche Wirkungsweise der erfindungsgemäßen Vorrichtung ist die Folgende:

Zur Aufbereitung des Wassers fließt das gereinigte Wasser durch einen Zufluss 15 in das Becken 2. Das verunreinigte Beckenwasser durchläuft zunächst einen mechanischen Filter, mit dem evtl. vorhandene Schmutzpartikel festgehalten werden. Danach durchströmt das Wasser ein biologisches Filterelement, in Fig. 2 mit 5 angedeutet, in dem Filterbakterien das Wasser biologisch aufbereiten. Über einen Heizstab wird das Wasser auf 30°C bis 36°C, ggf. auch geringfügig wärmer, erwärmt und mit einem Ozonbehandlungsverfahren behandelt. Der Ozonisator und ein Redoxpotentialsteuergerät ist in Fig. 2 mit 14 bezeichnet und lediglich symbolisch angedeutet.

Durch eine spezielle Dosierung des Ozons werden die vorhandenen Bakterien, Viren und Pilze abgetötet und der Ozonwert mit dem Redoxpotentialsteuergerät überwacht. Da Ozon für die Fische tödlich wäre, wird Rest-Ozon durch Aktivkohle entfernt. Danach läuft das gefilterte Wasser wieder zurück über den Zufluss 15 in das Behandlungsbecken 2, wobei über das Steuergerät 7 der entsprechende permanente Umlauf gesteuert und überwacht wird. Um ein Entweichen von Ozon in die Umgebung zu verhindern, kann ein weiterer Aktivkohlefilter vorgesehen sein.

In kleinen Mengen kann Leitungswasser als Frischwasser hinzugeführt werden. Über einen Überlauf 16 wird ein gleichbleibender Wasserstand aufrechterhalten. Dabei wird das zugeführte Frischwasser bevor es in das Becken eingeleitet wird mittels eines Frischwasserfilters gereinigt, um ggf. Chlor und evtl. Schwermetallreste u. dgl. zu entfernen.

Die Funktionsweise der Wasserbehandlung ist dabei folgende:
Das verschmutzte Beckenwasser wird zunächst über einen Vorfilter, bestehend aus Filterwatte, und nachfolgend über einen Filterschwamm geleitet, wobei ein weiterer biologischer Filter vorgesehen ist, z.B. als sogenannter "Siporax®"-Filter. Nach der mechanisch/biologischen Wasserreinigung wird das umlaufende Wasser mittels Heizstab auf die entsprechende Temperatur erwärmt und nachfolgend über eine Ozonreaktionskammer, wobei dem Wasser Ozon (O³) zugeführt wird, dass bei Berührung mit Wasser in Sauerstoff (O²) umgewandelt wird, so dass das Wasser mit Sauerstoff angereichert, so dass während der Hautbehandlung eine zusätzliche Sauerstoff- bzw. Luftzufuhr in das Becken entbehrlich ist.

Um den Fischen keinerlei Schaden zuzufügen und um einen sehr hohen Wasser-Hygienestandard zu erzielen, ist natürlich die Menge des zu dosierenden Ozongases entscheidend. Dieser exakte Wert wurde von uns in langen Testreihen ermittelt und wird vor Inbetriebnahme, umgelegt als Redoxwert, als Sollwert in das Redox-Mess-und Regelsystem, einprogrammiert. Ein sogenannter Ozonisator (Ozonerzeuger) gibt nun automatisch bei Bedarf die entsprechenden Ozonmenge an das Wasser ab. Um sicherzustellen, dass keinerlei Rest-Ozon in das Becken gelangt, wird abschließend noch mit Aktivkohle gearbeitet.

Um in Verbindung mit der o.g. Filtertechnik eine konstante Wasserhygiene zu gewährleisten, wird mithilfe eines dünnen Schlauches kontinuierlich Frischwasser in geringen Mengen, zugeführt. Dieses Frischwasser passiert, bevor es in das Becken gelangt, einen sogenannten Frischwasserfilter, welcher sich unter dem Sitz befindet. Mithilfe dieser Filterung werden Chlor und andere eventuell vorhandenen Schadstoffe wirkungsvoll entfernt. Um in den Modulen einen gleich bleibenden Wasserstand zu erzielen, läuft das überschüssige Altwasser über einen Überlauf ab.

Natürlich sind die beschriebenen Ausführungsbeispiele der Erfindung noch in vielfacher Hinsicht abzuändern, ohne den Grundgedanken zu verlassen. So ist die Erfindung insbesondere nicht auf eine besondere Art der Gestaltung der die Fische aufnehmenden Becken beschränkt, auch nicht auf das Material, aus dem diese Becken gefertigt sind, hier können Kunststoffbecken vorgesehen sein, Glasbecken od. dgl.

### Bezugszeichenliste:

- 1: Vorrichtung
- 2: Becken
- 3: Wasseraufbereitungsanlage
- 4: Additivaufnahme
- 5: Filtereinheit
- 6: elektrischer Anschluss
- 7: Steuerelektronik
- 8, 8b: Wände
- 9: Wand
- 10: gebogene Wand
- 11: Sitz
- 12: Hockerelement
- 13: Drehscheibe
- 14: Ozonisator-Redoxpotentialsteuergerät
- 15: Beckenzulauf
- 16: Beckenüberlauf

## Patentansprüche

1. Verfahren zur Hautbehandlung einer Person mittels Hautschuppen fressender Fische, insbesondere Garra Rufa Doktorfischen, wobei die zu behandelnde Person insgesamt oder mit Teilen des Körpers in einem mit den Fischen besetzten Becken eintaucht,
**dadurch gekennzeichnet,**
**dass** das Wasser im Becken im Kreislauf über Filter, über eine Heizung, eine Ozonreaktorkammer sowie einen Aktivkohlefilter im Kreislauf geführt wird.

2. Verfahren nach Anspruch 1,
**dadurch gekennzeichnet,**
**dass** über ein Redox-Mess- und -Regelgerät ein Sollwert zwischen 300 und 500mV eingestellt wird.

3. Verfahren nach Anspruch 1 oder 2,
**dadurch gekennzeichnet,**
**dass** die Wassertemperatur auf 30°C bis 36°C geregelt wird.

4. Vorrichtung zur Durchführung des Verfahrens nach einem der vorangehenden Ansprüche,
**gekennzeichnet durch**
wenigstens ein mit den Fischen und mit zu deren Überleben aufbereitetem Wasser gefülltes Becken (2), in das die zu behandelnde Person insgesamt oder mit Teilen des Körpers, wie Armen und Beinen, eintauchbar ist, sowie mit einer dem Becken (2) unmittelbar zugeordneten Wasseraufbereitungsanlage (3), wobei, wobei die Wasseraufbereitungsanlage (3) unterhalb einer Sitzgelegenheit (11) für die benutzende Person positioniert ist.

5. Vorrichtung nach Anspruch 4,
**dadurch gekennzeichnet,**
**dass** das Becken (2) als Fußtauchbecken ausgebildet ist.

6. Vorrichtung nach Anspruch 4 oder 5,
**dadurch gekennzeichnet,**
**dass** die Sitzfläche (11a) als Drehsitz ausgebildet ist.

7. Vorrichtung nach einem oder mehreren der Ansprüche 4 bis 6,
**dadurch gekennzeichnet,**
**dass** die Sitzfläche (11a) von einem in Aufsicht etwa U-förmigen, teilweise geöffneten Becken (2a) umgeben ist zur Positionierung der Hände und der Unterarme.

8. Vorrichtung nach einem oder mehreren der Ansprüche 4 bis 7,
**dadurch gekennzeichnet,**
**dass** die Aufbereitungsanlage (3) mit Filter und einer Ozonbehandlungseinrichtung ausgerüstet ist.

9. Vorrichtung nach einem oder mehreren der Ansprüche 4 bis 8,
**dadurch gekennzeichnet,**
**dass** das Becken (2,2a,2b) aus einem transparenten Material, insbesondere aus Plexiglas, gebildet ist.

10. Vorrichtung nach einem oder mehreren der Ansprüche 4 bis 9,
**dadurch gekennzeichnet,**
**dass** das Fußbecken (2) im Wesentlichen in Aufsicht neben zwei geraden Seitenwänden (8a,8b) eine etwa halbkreisförmige (10) und eine gerade Stirnwand (9) aufweist, wobei der geraden Stirnfläche (9) der Sitz (11) zugeordnet ist.

11. Vorrichtung nach einem oder mehreren der Ansprüche 4 bis 10,
**dadurch gekennzeichnet,**
**dass** der Sitz (11) als über die Wasseraufbereitungseinrichtung (3) stülpbarer Hocker (12) mit drehbarer und/oder höhenverstellbarer Sitzfläche (11a) ausgebildet ist.
